# EUROPÄISCHE PATENTSCHRIFT

(11) **EP 4 184 213 B1**
(45) Veröffentlichungstag und Bekanntmachung des Hinweises auf die Patenterteilung: **25.02.2026**
(21) Anmeldenummer: 21209972.5
(22) Anmeldetag: 23.11.2021
(51) Int. Cl.: G01S 17/00, G06N 20/00, G06T 15/06

(54) **VERFAHREN UND SYSTEM ZUM BESTIMMEN VON LIDAR-INTENSITÄTSWERTEN SOWIE TRAININGSVERFAHREN**
METHOD AND SYSTEM FOR DETERMINING LIDAR INTENSITY VALUES AND TRAINING METHOD
PROCÉDÉ ET SYSTÈME DE DÉTERMINATION DES VALEURS D'INTENSITÉ LIDAR, AINSI QUE PROCÉDÉ D'APPRENTISSAGE

(43) Veröffentlichungstag der Anmeldung: 24.05.2023
(73) Patentinhaber: dSPACE GmbH, 33102 Paderborn (DE)
(72) Erfinder: HASENKLEVER, Daniel, 33102 Paderborn (DE); Heymann, Jahn, 33098 Paderborn (DE)

(56) Entgegenhaltungen:
- EP-A1- 3 637 138
- EP-A1- 3 876 157
- CN-A- 104 268 323
- US-A1- 2020 301 799
- TIM ALLAN WHEELER ET AL: "Deep Stochastic Radar Models", ARXIV.ORG, CORNELL UNIVERSITY LIBRARY, 201 OLIN LIBRARY CORNELL UNIVERSITY ITHACA, NY 14853, 31 January 2017 (2017-01-31), XP080752628, DOI: 10.1109/IVS.2017.7995697

## Beschreibung

Die vorliegende Erfindung betrifft ein computerimplementiertes Verfahren zum Bestimmen von Intensitätswerten von Bildpunkten von durch eine Simulation einer 3D-Szene erzeugten Distanzdaten der Bildpunkte.

Die Erfindung betrifft ferner ein Verfahren zum Bereitstellen eines trainierten Algorithmus maschinellen Lernens zum Bestimmen von Intensitätswerten von Bildpunkten von durch eine Simulation einer 3D-Szene erzeugten Distanzdaten der Bildpunkte.

Die Erfindung betrifft des Weiteren ein System zum Bestimmen von Intensitätswerten von Bildpunkten von durch eine Simulation einer 3D-Szene erzeugten Distanzdaten der Bildpunkte. Die vorliegende Erfindung betrifft überdies ein Computerprogramm.

### Stand der Technik

In der Regel sind zur Erzeugung von LiDAR-Daten aufwendige Testfahrten in einer Realumgebung erforderlich, um die entsprechenden Daten zu gewinnen. Daher ist es wünschenswert, LiDAR-Sensordaten synthetisch zu erzeugen. Eine LiDAR-Punktwolke beinhaltet im Wesentlichen zwei Merkmale, die Intensität von Objekten und die Distanz von Objekten zum LiDAR-Sensor.

Die LiDAR-Intensität wird als die Rückstrahlstärke eines Laserstrahls aufgezeichnet. Die LiDAR-Intensität kann beispielsweise mit der Beschaffenheit des Oberflächenobjekts, das den Laserstrahl reflektiert, variieren. Eine niedrige Zahl steht für ein geringes Reflexionsvermögen, eine hohe Zahl für ein hohes Reflexionsvermögen. Die Intensität des zurückkehrenden Laserstrahls kann auch durch den Einfallswinkel (Scanwinkel), die Reichweite, die Oberflächenzusammensetzung, die Rauheit und den Feuchtigkeitsgehalt beeinflusst werden.

Während die Distanz vergleichsweise einfach durch Geometrie modellierbar ist, beruht die Intensität auf Reflektivitätswerten von Materialien, die wiederum abhängig vom Einfallswinkel und der Art der Reflexion sind.

Um die Intensität in einer virtuellen Umgebung modellieren zu können, müssen daher die Materialeigenschaften der zu modellierenden Objekte eingemessen werden. Das Einmessen von Materialien ist einerseits kostenaufwendig und andererseits nur in endlicher Anzahl möglich.

Aus EP3876157A1 ist ein computerimplementiertes Verfahren sowie System zum Erzeugen von überlagerte Distanz- und Intensitätsinformationen aufweisenden synthetischen Sensordaten eines Umfelderfassungssensors, insbesondere eines LiDAR-Sensors, eines Fahrzeugs mittels eines trainierten Algorithmus maschinellen Lernens bekannt.

Gleichzeitig ist das Modellieren von Messrauschen und Sensor-Rauschprofilen auf modellbasierter Art und Weise sehr komplex. Die Realität der synthetischen Daten ist begrenzt durch Faktoren wie realistische Oberflächenstruktur, Rauschen, Multipath-Ausbreitung und fehlendem Wissen über Materialeigenschaften.

Demzufolge besteht ein Bedarf, bestehende Verfahren und Systeme zum Erzeugen synthetischer Sensordaten eines Umfelderfassungssensors, insbesondere eines LiDAR-Sensors, eines Fahrzeugs dahingehend zu verbessern, dass eine vereinfachte, effizientere und kostengünstigere Erzeugung der virtuellen Fahrzeugumgebung ermöglicht wird.

Es ist daher Aufgabe der Erfindung, ein computerimplementiertes Verfahren, ein System, ein computerimplementiertes Trainingsverfahren sowie ein Computerprogramm anzugeben, welche eine vereinfachte, effizientere und kostengünstigere Erzeugung synthetischer Sensordaten eines Umfelderfassungssensors, insbesondere eines LiDAR-Sensors, eines Fahrzeugs ermöglichen.

### Offenbarung der Erfindung

Die Aufgabe wird erfindungsgemäß gelöst durch ein computerimplementiertes Verfahren zum Bestimmen von Intensitätswerten von Bildpunkten von durch eine Simulation einer 3D-Szene erzeugten Distanzdaten der Bildpunkte.

Das Verfahren umfasst ein Bereitstellen der Distanzdaten der Bildpunkte sowie ein Anwenden eines Algorithmus maschinellen Lernens auf die Distanzdaten, welcher erste Intensitätswerte der Bildpunkte ausgibt.

Das Verfahren umfasst ferner ein Anwenden eines Lichtstrahlverfolgungs-Verfahrens auf die Distanzdaten zum Bestimmen zweiter Intensitätswerte der Bildpunkte unter Verwendung von vorerfassten, insbesondere eingemessenen, Material-Reflexionswerten für eine erste Mehrzahl von Bildpunkten.

Des Weiteren umfasst das Verfahren ein Zuweisen eines ersten Konfidenzwertes zu jedem der ersten Intensitätswerte der Bildpunkte und eines zweiten Konfidenzwertes zu jedem der zweiten Intensitätswerte der Bildpunkte, und ein Berechnen dritter, insbesondere korrigierter, Intensitätswerte der Bildpunkte unter Verwendung der jedem der ersten Intensitätswerte und/oder zweiten Intensitätswerte zugewiesenen Konfidenzwerte, wobei die berechneten dritten, insbesondere korrigierten, Intensitätswerte der Bildpunkte in der Simulation der 3D-Szene, in einer Verkehrssimulation, verwendet werden und die Verkehrssimulation zum Testen autonomer Kraftfahrzeuge, Luftfahrzeuge und/oder Raumfahrzeuge verwendet wird.

Die Erfindung betrifft des Weiteren ein System zum Bestimmen von Intensitätswerten von Bildpunkten von durch eine Simulation einer 3D-Szene erzeugten Distanzdaten der Bildpunkte.

Das System umfasst Mittel zum Bereitstellen der Distanzdaten der Bildpunkte sowie eine erste Steuereinheit, welche dazu eingerichtet ist, einen Algorithmus maschinellen Lernens, welcher erste Intensitätswerte der Bildpunkte ausgibt, auf die Distanzdaten anzuwenden.

Das System umfasst ferner eine zweite Steuereinheit, welche dazu eingerichtet ist, ein Lichtstrahlverfolgungs-Verfahren auf die Distanzdaten zum Bestimmen zweiter Intensitätswerte der Bildpunkte unter Verwendung von vorerfassten, insbesondere eingemessenen, Material-Reflexionswerten für eine erste Mehrzahl von Bildpunkten anzuwenden.

Des Weiteren umfasst das System Mittel zum Zuweisen eines ersten Konfidenzwertes zu jedem der ersten Intensitätswerte der Bildpunkte und/oder eines zweiten Konfidenzwertes zu jedem der zweiten Intensitätswerte der Bildpunkte, und Mittel zum Berechnen dritter, insbesondere korrigierter, Intensitätswerte der Bildpunkte unter Verwendung der jedem der ersten und/oder zweiten Intensitätswerte zugewiesenen Konfidenzwerte, wobei die berechneten dritten, insbesondere korrigierten, Intensitätswerte der Bildpunkte in der Simulation der 3D-Szene, in einer Verkehrssimulation, verwendet werden und die Verkehrssimulation zum Testen autonomer Kraftfahrzeuge, Luftfahrzeuge und/oder Raumfahrzeuge verwendet wird.

Die Erfindung betrifft überdies ein Verfahren zum Bereitstellen eines computerimplementierten Verfahrens zum Bereitstellen eines trainierten Algorithmus maschinellen Lernens zum Bestimmen von Intensitätswerten von Bildpunkten von durch eine Simulation einer 3D-Szene erzeugten Distanzdaten der Bildpunkte.

Das Verfahren umfasst ein Empfangen eines ersten Trainingsdatensatzes von Distanzdaten der Bildpunkte, und ein Empfangen eines zweiten Trainingsdatensatzes von Intensitätswerten der Bildpunkte.

Des Weiteren umfasst das Verfahren ein Trainieren des Algorithmus maschinellen Lernens durch einen Optimierungsalgorithmus, welcher einen Extremwert einer Verlustfunktion zum Bestimmen der Intensitätswerte der Bildpunkte berechnet.

Eine Idee der vorliegenden Erfindung ist es, durch Anwenden eines Algorithmus maschinellen Lernens auf die Distanzdaten, welcher erste Intensitätswerte der Bildpunkte ausgibt, und durch Anwenden eines Lichtstrahlverfolgungs-Verfahrens auf die Distanzdaten zum Bestimmen zweiter Intensitätswerte der Bildpunkte unter Verwendung von vorerfassten, insbesondere eingemessenen, Material-Reflexionswerten für eine erste Mehrzahl von Bildpunkten und/oder eines statistischen Verfahrens für eine zweite Mehrzahl von Bildpunkten aus der Simulation Intensitätswerte der Bildpunkte zu gewinnen.

Durch Zuweisen eines ersten Konfidenzwertes zu jedem der ersten Intensitätswerte der Bildpunkte und/oder eines zweiten Konfidenzwertes zu jedem der zweiten Intensitätswerte der Bildpunkte können in vorteilhafter Weise dort wo der erste Konfidenzwert hoch ist der erste Intensitätswert und dort wo der zweite Konfidenzwert hoch ist der zweite Intensitätswert verwendet werden.

Somit können dritte, insbesondere korrigierte, Intensitätswerte der Bildpunkte unter Verwendung der jedem der ersten Intensitätswerte und/oder zweiten Intensitätswerte zugewiesenen Konfidenzwerte berechnet werden, was in einer verbesserten Genauigkeit der Intensitätswerte der Bildpunkte resultiert.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass die dritten, insbesondere korrigierten, Intensitätswerte der Bildpunkte durch Bilden eines gewichteten Mittelwerts aus einem Summenprodukt aufweisend ein erstes Produkt aus dem jeweiligen ersten Intensitätswert und dem zugewiesenen ersten Konfidenzwert, und ein zweites Produkt aus dem jeweiligen zweiten Intensitätswert und dem zugewiesenen zweiten Konfidenzwert, geteilt durch eine Summe der Konfidenzwerte der jeweiligen Bildpunkte berechnet werden.

Somit können in vorteilhafter Weise physikalische Eigenschaften und Distanzinformationen jeweils mit einer Gewichtung versehen und Gewichtungen bei Berechnung bzw. Mischung der Intensitätswerte berücksichtigt werden.

Gemäß einer weiteren bevorzugten Weiterbildung ist vorgesehen, dass den unter Verwendung der vorerfassten, insbesondere eingemessenen, Material-Reflexionswerte für die erste Mehrzahl von Bildpunkten bestimmten ersten Intensitätswerten ein höherer Konfidenzwert als den durch das statistische Verfahren für die zweite Mehrzahl von Bildpunkten bestimmten zweiten Intensitätswerten zugewiesen wird.

Aufgrund der höheren Genauigkeit der eingemessen Material-Reflexionswerte im Vergleich zu den durch das statistische Verfahren bestimmten Intensitätswerten wird den eingemessen Material-Reflexionswerten somit ein höherer Konfidenzwert beigemessen.

Gemäß einer weiteren bevorzugten Weiterbildung ist vorgesehen, dass Kamera-Bilddaten, insbesondere RGB-Bilddaten, der Bildpunkte bereitgestellt werden, wobei die Distanzdaten der Bildpunkte und die Kamera-Bilddaten der Bildpunkte durch die Simulation der 3D-Szene bereitgestellt werden. Das Bereitstellen der Kamera-Bilddaten ermöglicht in vorteilhafter Weise das Bestimmen präziserer Distanzdaten, was somit eine genauere Bestimmung der Reflektivitätswerte erlaubt.

Gemäß einer weiteren bevorzugten Weiterbildung ist vorgesehen, dass die Simulation der 3D-Szene Rohdistanzdaten der Bildpunkte als 3D-Punktwolke erzeugt, welche durch ein Bildverarbeitungsverfahren in 2D-Kugelkoordinaten transformiert und als, insbesondere 2D, Distanzdaten der Bildpunkte bereitgestellt werden.

Die weitere Verarbeitung der Distanzdaten durch den Algorithmus maschinellen Lernens und das Lichtstrahlverfolgungs-Verfahren kann somit unter Verwendung von Daten erfolgen, welche in einem für den jeweiligen Algorithmus optimalen Format vorliegen.

Gemäß einer weiteren bevorzugten Weiterbildung ist vorgesehen, dass der Algorithmus maschinellen Lernens und das Lichtstrahlverfolgungs-Verfahren die bereitgestellten Distanzdaten der Bildpunkte gleichzeitig verarbeiten. Die gleichzeitige Verarbeitung der Daten durch die jeweiligen Algorithmen ermöglicht somit ein effizientes Verfahren zum Bestimmen von Intensitätswerten von Bildpunkten von durch die Simulation der 3D-Szene erzeugten Distanzdaten der Bildpunkte.

Gemäß einer weiteren bevorzugten Weiterbildung ist vorgesehen, dass die berechneten dritten, insbesondere korrigierten, Intensitätswerte der Bildpunkte in der Simulation der 3D-Szene, insbesondere in einer Verkehrssimulation, verwendet werden. Die Simulation der 3D-Szene kann somit in vorteilhafter Weise unter Verwendung von Intensitätswerten der Bildpunkte ermöglicht werden, welche auf Basis der Distanzinformationen der Bildpunkte generiert wurden.

Gemäß einer weiteren bevorzugten Weiterbildung ist vorgesehen, dass vorerfasste, insbesondere eingemessene, Material-Reflexionswerte für die erste Mehrzahl von Bildpunkten durch eine bidirektionale Reflexionsverteilungsfunktion bestimmt sind. Somit können in vorteilhafter Weise für Bildpunkte mit bekannten Intensitätswerten jeweils exakte Material-Reflexionswerte bestimmt werden.

Gemäß einer weiteren bevorzugten Weiterbildung ist vorgesehen, dass der erste Trainingsdatensatz durch einen Umfelderfassungssensor, insbesondere einen LiDAR-Sensor, erfasste Distanzdaten der Bildpunkte und der zweite Trainingsdatensatz durch den Umfelderfassungssensor erfasste Intensitätswerte der Bildpunkte aufweist, oder wobei der erste Trainingsdatensatz durch einen Umfelderfassungssensor, insbesondere einen LiDAR-Sensor, erfasste und durch eine Simulation einer 3D-Szene erzeugte Distanzdaten der Bildpunkte aufweist, und wobei der zweite Trainingsdatensatz durch den Umfelderfassungssensor erfasste und durch eine Simulation einer 3D-Szene erzeugte Intensitätswerte der Bildpunkte aufweist.

Somit kann durch Vermischen real und synthetisch erzeugter Trainingsdaten erreicht werden, dass der trainierte Algorithmus maschinellen Lernens eine geringere Fehlanpassung bezüglich der bei der Inferenz verwendeten synthetischen, insbesondere aus der Simulation stammenden, Distanzdaten aufweist.

Gemäß einer weiteren bevorzugten Weiterbildung ist vorgesehen, dass der erste Trainingsdatensatz durch einen Kamera-Sensor erfasste Kamera-Bilddaten, insbesondere RGB-Bilddaten, der Bildpunkte aufweist. Das Bereitstellen der Kamera-Bilddaten ermöglicht in vorteilhafter Weise das Bestimmen präziserer Distanzdaten, die somit eine genauere Bestimmung der Reflektivitätswerte erlaubt.

Gemäß einer weiteren bevorzugten Weiterbildung ist vorgesehen, dass der erste Trainingsdatensatz Distanzdaten der Bildpunkte und der zweite Trainingsdatensatz Intensitätswerte der Bildpunkte jeweils bei unterschiedlichen Umgebungsbedingungen, insbesondere unterschiedlichen Wetterbedingungen, Sichtbedingungen und/oder Uhrzeiten, aufweisen.

Das Bereitstellen der Distanzdaten der Bildpunkte sowie der Intensitätswerte der Bildpunkte bei unterschiedlichen Umgebungsbedingungen ermöglicht in vorteilhafter Weise das Trainieren eines robusteren Algorithmus maschinellen Lernens zum Bestimmen der Intensitätswerte der Bildpunkte.

Gemäß einer weiteren bevorzugten Weiterbildung ist vorgesehen, dass eine unüberwachte Domänenadaption unter Verwendung nicht annotierter Daten der Distanzdaten der Bildpunkte und/oder der Intensitätswerte der Bildpunkte durchgeführt wird. Somit kann in vorteilhafter Weise eine Verbesserung des Trainings durch Domänenadaption der Eingangsdaten bezüglich realer und künstlicher Eingangs-Sensordaten ermöglicht werden. Die Domänenadaption verwendet dabei Backpropagation eines Verlustes eines Domänen-Labels, um ein Merkmal auszuwählen, für welches die jeweiligen Domänen weniger unterscheidbar sind.

Die hierin beschriebenen Merkmale des Verfahrens sind auf eine Vielzahl virtueller Umgebungen wie beispielsweise das Testen autonomer Kraftfahrzeuge, Luftfahrzeuge und/oder Raumfahrzeuge anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines computerimplementierten Verfahrens zum Bestimmen von Intensitätswerten von Bildpunkten von durch eine Simulation einer 3D-Szene erzeugten Distanzdaten der Bildpunkte gemäß einer bevorzugten Ausführungsform der Erfindung;
- Fig. 2: eine schematische Darstellung eines Systems zum Bestimmen von Intensitätswerten von Bildpunkten von durch eine Simulation einer 3D-Szene erzeugten Distanzdaten der Bildpunkte gemäß der bevorzugten Ausführungsform der Erfindung; und
- Fig. 3: ein Ablaufdiagramm des Verfahrens zum Bereitstellen eines trainierten Algorithmus maschinellen Lernens zum Bestimmen von Intensitätswerten von Bildpunkten von durch eine Simulation einer 3D-Szene erzeugten Distanzdaten der Bildpunkte gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

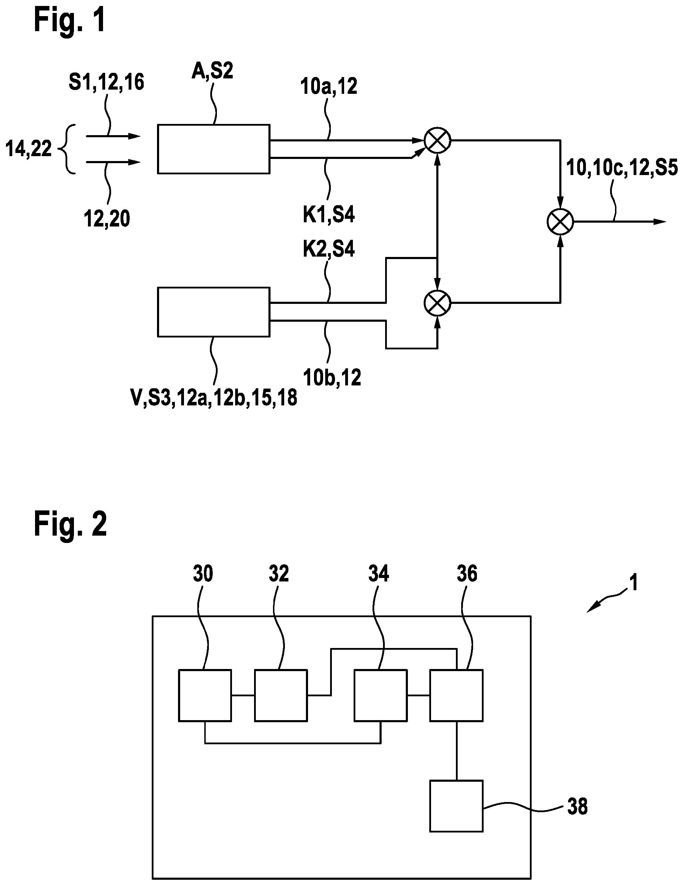

Das in Fig. 1 gezeigte Verfahren zum Bestimmen von Intensitätswerten 10 von Bildpunkten 12 von durch eine Simulation 14 einer 3D-Szene erzeugten Distanzdaten 16 der Bildpunkte 12 umfasst ein Bereitstellen S1 der Distanzdaten 16 der Bildpunkte 12 sowie ein Anwenden S2 eines Algorithmus maschinellen Lernens A auf die Distanzdaten 16, welcher erste Intensitätswerte 10a der Bildpunkte 12 ausgibt.

Des Weiteren umfasst das Verfahren ein Anwenden S3 eines Lichtstrahlverfolgungs-Verfahrens V auf die Distanzdaten 16 zum Bestimmen zweiter Intensitätswerte 10b der Bildpunkte 12 unter Verwendung von vorerfassten, insbesondere eingemessenen, Material-Reflexionswerten 15 für eine erste Mehrzahl von Bildpunkten 12a und/oder eines statistischen Verfahrens 18 für eine zweite Mehrzahl von Bildpunkten 12b.

Das Verfahren umfasst darüber hinaus ein Zuweisen S4 eines ersten Konfidenzwertes K1 zu jedem der ersten Intensitätswerte 10a der Bildpunkte 12 und/oder eines zweiten Konfidenzwertes K2 zu jedem der zweiten Intensitätswerte 10b der Bildpunkte 12 und ein Berechnen S5 dritter, insbesondere korrigierter, Intensitätswerte 10c der Bildpunkte 12 unter Verwendung der jedem der ersten Intensitätswerte 10a und/oder zweiten Intensitätswerte 10b zugewiesenen Konfidenzwerte K1, K2.

Die dritten, insbesondere korrigierten, Intensitätswerte 10c der Bildpunkte 12 werden durch Bilden eines gewichteten Mittelwerts aus einem Summenprodukt aufweisend ein erstes Produkt aus dem jeweiligen ersten Intensitätswert 10a und dem zugewiesenen ersten Konfidenzwert K1, und ein zweites Produkt aus dem jeweiligen zweiten Intensitätswert 10b und dem zugewiesenen zweiten Konfidenzwert K2, geteilt durch eine Summe der Konfidenzwerte K1, K2 der jeweiligen Bildpunkte 12 berechnet.

Alternativ können die jeweiligen Paare bestehend aus dem ersten Intensitätswert 10a und dem zugewiesenen ersten Konfidenzwert K1 sowie dem zweiten Intensitätswert10b und dem zugewiesenen zweiten Konfidenzwert K2 durch ein alternatives statistisches Verfahren zum Bestimmen der korrigierten, Intensitätswerte 10c der Bildpunkte 12 verrechnet werden.

Den unter Verwendung der vorerfassten, insbesondere eingemessenen, Material-Reflexionswerte 15 wird für die erste Mehrzahl von Bildpunkten 12a bestimmten zweiten Intensitätswerten 10b ein höherer Konfidenzwert K1, K2 als den durch das statistische Verfahren 18 für die zweite Mehrzahl von Bildpunkten 12b bestimmten zweiten Intensitätswerten 10b zugewiesen.

Ferner werden Kamera-Bilddaten 20, insbesondere RGB-Bilddaten, der Bildpunkte 12 bereitgestellt. Die Distanzdaten 16 der Bildpunkte 12 und die Kamera-Bilddaten 20 der Bildpunkte 12 werden dabei durch die Simulation 14 der 3D-Szene bereitgestellt.

Die Simulation 14 der 3D-Szene erzeugt Rohdistanzdaten 16 der Bildpunkte 12 als 3D-Punktwolke, welche durch ein Bildverarbeitungsverfahren 22 in 2D-Kugelkoordinaten transformiert und als, insbesondere 2D, Distanzdaten 16 der Bildpunkte 12 bereitgestellt werden. Der Algorithmus maschinellen Lernens A und das Lichtstrahlverfolgungs-Verfahren V verarbeiten die bereitgestellten Distanzdaten 16 der Bildpunkte 12 dabei gleichzeitig.

Die berechneten dritten, insbesondere korrigierten, Intensitätswerte 10 der Bildpunkte 12 werden in der Simulation 14 der 3D-Szene, insbesondere in einer Verkehrssimulation 14, verwendet. Vorerfasste, insbesondere eingemessene, Material-Reflexionswerte 15 für die erste Mehrzahl von Bildpunkten 12a sind hierbei durch eine bidirektionale Reflexionsverteilungsfunktion bestimmt.

Fig. 2 zeigt eine schematische Darstellung eines Systems zum Bestimmen von Intensitätswerten von Bildpunkten von durch eine Simulation einer 3D-Szene erzeugten Distanzdaten der Bildpunkte gemäß der bevorzugten Ausführungsform der Erfindung.

Das System umfasst Mittel 30 zum Bereitstellen der Distanzdaten 16 der Bildpunkte 12 sowie eine erste Steuereinheit 32, welche dazu eingerichtet ist, einen Algorithmus maschinellen Lernens A, welcher erste Intensitätswerte 10 der Bildpunkte 12 ausgibt, auf die Distanzdaten 16 anzuwenden.

Darüber hinaus umfasst das System eine zweite Steuereinheit 34, welche dazu eingerichtet ist, ein Lichtstrahlverfolgungs-Verfahren V auf die Distanzdaten 16 zum Bestimmen zweiter Intensitätswerte 10 der Bildpunkte 12 unter Verwendung von vorerfassten, insbesondere eingemessenen, Material-Reflexionswerten 15 für eine erste Mehrzahl von Bildpunkten 12a und/oder ein statistisches Verfahren 18 für eine zweite Mehrzahl von Bildpunkten 12b anzuwenden.

Das System umfasst ferner Mittel 36 zum Zuweisen eines ersten Konfidenzwertes K1 zu jedem der ersten Intensitätswerte 10 der Bildpunkte 12 und/oder eines zweiten Konfidenzwertes K2 zu jedem der zweiten Intensitätswerte 10 der Bildpunkte 12 sowie Mittel 38 zum Berechnen dritter, insbesondere korrigierter, Intensitätswerte 10 der Bildpunkte 12 unter Verwendung der jedem der ersten und/oder zweiten Intensitätswerte 10 zugewiesenen Konfidenzwerte K1, K2.

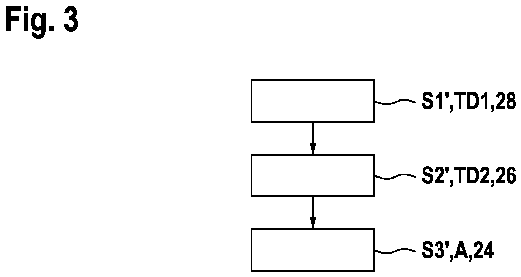

Fig. 3 zeigt ein Ablaufdiagramm des Verfahrens zum Bereitstellen eines trainierten Algorithmus maschinellen Lernens zum Bestimmen von Intensitätswerten von Bildpunkten von durch eine Simulation einer 3D-Szene erzeugten Distanzdaten der Bildpunkte gemäß der bevorzugten Ausführungsform der Erfindung.

Das Verfahren umfasst ein Empfangen S1' eines ersten Trainingsdatensatzes TD1 von Distanzdaten 16 der Bildpunkte 12 sowie ein Empfangen S2' eines zweiten Trainingsdatensatzes TD2 von Intensitätswerten 10 der Bildpunkte 12.

Ferner umfasst das Verfahren ein Trainieren S3' des Algorithmus maschinellen Lernens A durch einen Optimierungsalgorithmus 24, welcher einen Extremwert einer Verlustfunktion zum Bestimmen der Intensitätswerte 10 der Bildpunkte 12 berechnet.

Der erste Trainingsdatensatz TD1 weist durch einen Umfelderfassungssensor 26, insbesondere einen LiDAR-Sensor, erfasste Distanzdaten 16 der Bildpunkte 12 und der zweite Trainingsdatensatz durch den Umfelderfassungssensor 26 erfasste Intensitätswerte 10 der Bildpunkte 12 auf.

Alternativ kann der erste Trainingsdatensatz TD1 durch einen Umfelderfassungssensor 26, insbesondere einen LiDAR-Sensor, erfasste und durch eine Simulation 14 einer 3D-Szene erzeugte Distanzdaten 16 der Bildpunkte 12 aufweisen. Ferner weist der zweite Trainingsdatensatz TD2 durch den Umfelderfassungssensor 26 erfasste und durch eine Simulation 14 einer 3D-Szene erzeugte Intensitätswerte 10 der Bildpunkte 12 auf.

Darüber hinaus weist der erste Trainingsdatensatz TD1 durch einen Kamera-Sensor 28 erfasste Kamera-Bilddaten 20, insbesondere RGB-Bilddaten, der Bildpunkte 12 auf.

Der erste Trainingsdatensatz TD1 weist Distanzdaten 16 der Bildpunkte 12 und der zweite Trainingsdatensatz TD2 Intensitätswerte 10 der Bildpunkte 12 jeweils bei unterschiedlichen Umgebungsbedingungen, insbesondere unterschiedlichen Wetterbedingungen, Sichtbedingungen und/oder Uhrzeiten, auf.

Ferner wird eine unüberwachte Domänenadaption unter Verwendung nicht annotierter Daten der Distanzdaten 16 der Bildpunkte 12 und/oder der Intensitätswerte 10 der Bildpunkte 12 durchgeführt.

### Zusammenfassung

- 1: System
- 10: Intensitätswerte
- 10a: erste Intensitätswerte
- 10b: zweite Intensitätswerte
- 12: Bildpunkte
- 12a: erste Mehrzahl von Bildpunkten
- 12b: zweite Mehrzahl von Bildpunkten
- 14: Simulation
- 15: Material-Reflexionswerte
- 16: Distanzdaten
- 18: statistisches Verfahren
- 20: Kamera-Bilddaten
- 22: Bildverarbeitungsverfahren
- 24: Optimierungsalgorithmus
- 26: Umfelderfassungssensor
- 28: Kamera-Sensor
- 30: Mittel
- 32: erste Steuereinheit
- 34: zweite Steuereinheit
- 36: Mittel
- 38: Mittel
- A: Algorithmus maschinellen Lernens
- K1: erster Konfidenzwert
- K2: zweiter Konfidenzwert
- S1-S5: Verfahrensschritte
- S1'-S3': Verfahrensschritte
- TD1: erster Trainingsdatensatz
- TD2: zweiter Trainingsdatensatz
- V: Lichtstrahlverfolgungs-Verfahren

## Patentansprüche

1. Computerimplementiertes Verfahren zum Bestimmen von Intensitätswerten (10) von Bildpunkten (12) von durch eine Simulation (14) einer 3D-Szene erzeugten Distanzdaten (16) der Bildpunkte (12), mit den Schritten:
Bereitstellen (S1) der Distanzdaten (16) der Bildpunkte (12);
Anwenden (S2) eines Algorithmus maschinellen Lernens (A) auf die Distanzdaten (16), welcher erste Intensitätswerte (10a) der Bildpunkte (12) ausgibt;
Anwenden (S3) eines Lichtstrahlverfolgungs-Verfahrens (V) auf die Distanzdaten (16) zum Bestimmen zweiter Intensitätswerte (10b) der Bildpunkte (12) unter Verwendung von vorerfassten,
insbesondere eingemessenen, Material-Reflexionswerten (15) für eine erste Mehrzahl von Bildpunkten (12a);
Zuweisen (S4) eines ersten Konfidenzwertes (K1) zu jedem der ersten Intensitätswerte (10a) der Bildpunkte (12) und eines zweiten Konfidenzwertes (K2) zu jedem der zweiten Intensitätswerte (10b) der Bildpunkte (12); und
Berechnen (S5) dritter, insbesondere korrigierter, Intensitätswerte (10c) der Bildpunkte (12) unter Verwendung der jedem der ersten Intensitätswerte (10a) und/oder zweiten Intensitätswerte (10b) zugewiesenen Konfidenzwerte (K1, K2), wobei die berechneten dritten, insbesondere korrigierten, Intensitätswerte (10) der Bildpunkte (12) in der Simulation (14) der 3D-Szene, in einer Verkehrssimulation (14), verwendet werden und die Verkehrssimulation zum Testen autonomer Kraftfahrzeuge, Luftfahrzeuge und/oder Raumfahrzeuge verwendet wird.

2. Computerimplementiertes Verfahren nach Anspruch 1, wobei die dritten, insbesondere korrigierten, Intensitätswerte (10c) der Bildpunkte (12) durch Bilden eines gewichteten Mittelwerts aus einem Summenprodukt aufweisend ein erstes Produkt aus dem jeweiligen ersten Intensitätswert (10a) und dem zugewiesenen ersten Konfidenzwert (K1), und ein zweites Produkt aus dem jeweiligen zweiten Intensitätswert (10b) und dem zugewiesenen zweiten Konfidenzwert (K2), geteilt durch eine Summe der Konfidenzwerte (K1, K2) der jeweiligen Bildpunkte (12) berechnet werden.

3. Computerimplementiertes Verfahren nach Anspruch 1 oder 2, wobei den unter Verwendung der vorerfassten, insbesondere eingemessenen, Material-Reflexionswerte (15) für die erste Mehrzahl von Bildpunkten (12a) bestimmten zweiten Intensitätswerten (10b) ein höherer Konfidenzwert (K1, K2) als den durch das statistische Verfahren (18) für die zweite Mehrzahl von Bildpunkten (12b) bestimmten zweiten Intensitätswerten (10b) zugewiesen wird.

4. Computerimplementiertes Verfahren nach einem der vorhergehenden Ansprüche, wobei Kamera-Bilddaten (20), insbesondere RGB-Bilddaten, der Bildpunkte (12) bereitgestellt werden, wobei die Distanzdaten (16) der Bildpunkte (12) und die Kamera-Bilddaten (20) der Bildpunkte (12) durch die Simulation (14) der 3D-Szene bereitgestellt werden.

5. Computerimplementiertes Verfahren nach einem der vorhergehenden Ansprüche, wobei die Simulation (14) der 3D-Szene Rohdistanzdaten (16) der Bildpunkte (12) als 3D-Punktwolke erzeugt, welche durch ein Bildverarbeitungsverfahren (22) in 2D-Kugelkoordinaten transformiert und als, insbesondere 2D, Distanzdaten (16) der Bildpunkte (12) bereitgestellt werden.

6. Computerimplementiertes Verfahren nach einem der vorhergehenden Ansprüche, wobei der Algorithmus maschinellen Lernens (A) und das Lichtstrahlverfolgungs-Verfahren (V) die bereitgestellten Distanzdaten (16) der Bildpunkte (12) gleichzeitig verarbeiten.

7. Computerimplementiertes Verfahren nach einem der vorhergehenden Ansprüche, wobei vorerfasste, insbesondere eingemessene, Material-Reflexionswerte (15) für die erste Mehrzahl von Bildpunkten (12a) durch eine bidirektionale Reflexionsverteilungsfunktion bestimmt sind.

8. System (1) zum Bestimmen von Intensitätswerten (10) von Bildpunkten (12) von durch eine Simulation (14) einer 3D-Szene erzeugten Distanzdaten (16) der Bildpunkte (12), mit:
Mitteln (30) zum Bereitstellen der Distanzdaten (16) der Bildpunkte (12);
einer ersten Steuereinheit (32), welche dazu eingerichtet ist, einen Algorithmus maschinellen Lernens (A), welcher erste Intensitätswerte (10) der Bildpunkte (12) ausgibt, auf die Distanzdaten (16) anzuwenden;
einer zweiten Steuereinheit (34), welche dazu eingerichtet ist, ein Lichtstrahlverfolgungs-Verfahren (V) auf die Distanzdaten (16) zum Bestimmen zweiter Intensitätswerte (10) der Bildpunkte (12) unter Verwendung von vorerfassten, insbesondere eingemessenen, Material-Reflexionswerten (15) für eine erste Mehrzahl von Bildpunkten (12a) anzuwenden;
Mitteln (36) zum Zuweisen eines ersten Konfidenzwertes (K1) zu jedem der ersten Intensitätswerte (10) der Bildpunkte (12) und eines zweiten Konfidenzwertes (K2) zu jedem der zweiten Intensitätswerte (10) der Bildpunkte (12); und
Mitteln (38) zum Berechnen dritter, insbesondere korrigierter, Intensitätswerte (10) der Bildpunkte (12) unter Verwendung der jedem der ersten und zweiten Intensitätswerte (10) zugewiesenen Konfidenzwerte (K1, K2), wobei die berechneten dritten, insbesondere korrigierten, Intensitätswerte (10) der Bildpunkte (12) in der Simulation (14) der 3D-Szene, in einer Verkehrssimulation (14), verwendet werden und die Verkehrssimulation zum Testen autonomer Kraftfahrzeuge, Luftfahrzeuge und/oder Raumfahrzeuge verwendet wird.

9. Computerprogramm mit Programmcode, um ein Verfahren nach einem der Ansprüche 1 bis 7 auszuführen, wenn das Computerprogramm auf einem Computer ausgeführt wird.

## Claims

1. Computer-implemented method for determining intensity values (10) of pixels (12) from distance data (16) of the pixels (12) generated by a simulation (14) of a 3D scene, comprising the steps of:
Providing (S1) the distance data (16) of the pixels (12);
applying (S2) a machine learning algorithm (A) to the distance data (16), which outputs first intensity values (10a) of the pixels (12);
applying (S3) a light ray tracing method (V) to the distance data (16) to determine second intensity values (10b) of the pixels (12) using pre-captured, in particular measured, material reflectance values (15) for a first plurality of pixels (12a);
assigning (S4) a first confidence value (K1) to each of the first intensity values (10a) of the pixels (12) and a second confidence value (K2) to each of the second intensity values (10b) of the pixels (12); and
calculating (S5) third, in particular corrected, intensity values (10c) of the pixels (12) using the confidence values (K1, K2) assigned to each of the first intensity values (10a) and/or second intensity values (10b), wherein the calculated third, in particular corrected, intensity values (10) of the pixels (12) are used in the simulation (14) of the 3D scene, in a traffic simulation (14), and the traffic simulation is used for testing autonomous motor vehicles, aircraft and/or spacecraft.

2. Computer-implemented method according to claim 1, wherein the third, in particular corrected, intensity values (10c) of the pixels (12) are calculated by forming a weighted mean value from a sum product comprising a first product of the respective first intensity value (10a) and the assigned first confidence value (K1), and a second product of the respective second intensity value (10b) and the assigned second confidence value (K2), divided by a sum of the confidence values (K1, K2) of the respective pixels (12).

3. Computer-implemented method according to claim 1 or 2, wherein a higher confidence value (K1, K2) is assigned to the second intensity values (10b) determined for the first plurality of pixels (12a) using the pre-captured, in particular measured, material reflectance values (15) than to the second intensity values (10b) determined by the statistical method (18) for the second plurality of pixels (12b).

4. Computer-implemented method according to one of the preceding claims, wherein camera image data (20), in particular RGB image data, of the pixels (12) are provided, wherein the distance data (16) of the pixels (12) and the camera image data (20) of the pixels (12) are provided by the simulation (14) of the 3D scene.

5. Computer-implemented method according to one of the preceding claims, wherein the simulation (14) of the 3D scene generates raw distance data (16) of the pixels (12) as a 3D point cloud, which is transformed into 2D spherical coordinates by an image processing method (22) and provided as, in particular 2D, distance data (16) of the pixels (12).

6. Computer-implemented method according to one of the preceding claims, wherein the machine learning algorithm (A) and the light ray tracing method (V) simultaneously process the provided distance data (16) of the pixels (12).

7. Computer-implemented method according to one of the preceding claims, wherein pre-captured, in particular measured, material reflectance values (15) for the first plurality of pixels (12a) are determined by a bidirectional reflectance distribution function.

8. System (1) for determining intensity values (10) of pixels (12) from distance data (16) of the pixels (12) generated by a simulation (14) of a 3D scene, comprising:
means (30) for providing the distance data (16) of the pixels (12);
a first control unit (32), which is set up to apply a machine learning algorithm (A), which outputs first intensity values (10) of the pixels (12), to the distance data (16);
a second control unit (34), which is set up to apply a light ray tracing method (V) to the distance data (16) for determining second intensity values (10) of the pixels (12) using pre-captured, in particular measured, material reflectance values (15) for a first plurality of pixels (12a);
means (36) for assigning a first confidence value (K1) to each of the first intensity values (10) of the pixels (12) and a second confidence value (K2) to each of the second intensity values (10) of the pixels (12); and means (38) for calculating third, in particular corrected, intensity values (10) of the pixels (12) using the confidence values (K1, K2) assigned to each of the first and second intensity values (10), wherein the calculated third, in particular corrected, intensity values (10) of the pixels (12) are used in the simulation (14) of the 3D scene, in a traffic simulation (14), and the traffic simulation is used for testing autonomous motor vehicles, aircraft and/or spacecraft.

9. Computer program comprising program code to execute a method according to any one of claims 1 to 7, when the computer program is executed on a computer.

## Revendications

1. Procédé mis en oeuvre par ordinateur pour déterminer des valeurs d'intensité (10) de points d'image (12) à partir de données de distance (16) des points d'image (12) générées par une simulation (14) d'une scène 3D, comprenant les étapes suivantes :
Fournir (S1) les données de distance (16) des points d'image (12) ;
Application (S2) d'un algorithme d'apprentissage automatique (A) aux données de distance (16), qui fournit en sortie des premières valeurs d'intensité (10a) des points d'image (12) ;
Appliquer (S3) un procédé de suivi de faisceau lumineux (V) aux données de distance (16) pour déterminer des deuxièmes valeurs d'intensité (10b) des points d'image (12) en utilisant des valeurs de réflexion de matériau (15) préenregistrées, en particulier mesurées, pour une première pluralité de points d'image (12a) ;
attribuer (S4) une première valeur de confiance (K1) à chacune des premières valeurs d'intensité (10a) des points d'image (12) et une deuxième valeur de confiance (K2) à chacune des deuxièmes valeurs d'intensité (10b) des points d'image (12) ; et
calculer (S5) des troisièmes valeurs d'intensité (10c), notamment corrigées, des points d'image (12) en utilisant les valeurs de confiance (K1, K2) attribuées à chacune des premières valeurs d'intensité (10a) et/ou des deuxièmes valeurs d'intensité (10b), les troisièmes valeurs d'intensité (10) calculées, notamment corrigées, des points d'image (12) étant utilisées dans la simulation (14) de la scène 3D, dans une simulation de trafic (14), et la simulation de trafic étant utilisée pour tester des véhicules automobiles, des aéronefs et/ou des véhicules spatiaux autonomes.

2. Procédé mis en oeuvre par ordinateur selon la revendication 1, dans lequel les troisièmes valeurs d'intensité (10c), en particulier corrigées, des points d'image (12) sont calculées en formant une moyenne pondérée d'un produit de somme présentant un premier produit de la première valeur d'intensité (10a) respective et de la première valeur de confiance (K1) attribuée, et un deuxième produit de la deuxième valeur d'intensité (10b) respective et de la deuxième valeur de confiance (K2) attribuée, divisé par une somme des valeurs de confiance (K1, K2) des points d'image (12) respectifs.

3. Procédé mis en œuvre par ordinateur selon la revendication 1 ou 2, dans lequel une valeur de confiance (K1, K2) plus élevée que les deuxièmes valeurs d'intensité (10b) déterminées par le procédé statistique (18) pour la deuxième pluralité de points d'image (12b) est attribuée aux deuxièmes valeurs d'intensité (10b) déterminées en utilisant les valeurs de réflexion de matériau (15) préenregistrées, en particulier mesurées, pour la première pluralité de points d'image (12a).

4. Procédé mis en œuvre par ordinateur selon l'une des revendications précédentes, dans lequel des données d'image de caméra (20), en particulier des données d'image RVB, des points d'image (12) sont fournies, les données de distance (16) des points d'image (12) et les données d'image de caméra (20) des points d'image (12) étant fournies par la simulation (14) de la scène 3D.

5. Procédé mis en œuvre par ordinateur selon l'une des revendications précédentes, dans lequel la simulation (14) de la scène 3D génère des données de distance brutes (16) des points d'image (12) sous forme de nuage de points 3D, qui sont transformées par un procédé de traitement d'image (22) en coordonnées sphériques 2D et mises à disposition sous forme de données de distance (16), notamment 2D, des points d'image (12).

6. Procédé mis en œuvre par ordinateur selon l'une des revendications précédentes, dans lequel l'algorithme d'apprentissage automatique (A) et le procédé de suivi de faisceau lumineux (V) traitent simultanément les données de distance (16) fournies des points d'image (12).

7. Procédé mis en œuvre par ordinateur selon l'une des revendications précédentes, dans lequel des valeurs de réflexion de matériau (15) préenregistrées, en particulier mesurées, pour la première pluralité de points d'image (12a) sont déterminées par une fonction de distribution de réflexion bidirectionnelle.

8. Système (1) pour déterminer des valeurs d'intensité (10) de points d'image (12) à partir de données de distance (16) des points d'image (12) générées par une simulation (14) d'une scène 3D, comprenant :
des moyens (30) pour fournir les données de distance (16) des points d'image (12) ;
une première unité de commande (32) qui est conçue pour appliquer aux données de distance (16) un algorithme d'apprentissage automatique (A) qui délivre des premières valeurs d'intensité (10) des points d'image (12) ;
une deuxième unité de commande (34) qui est conçue pour appliquer un procédé de suivi de rayon lumineux (V) aux données de distance (16) pour déterminer des deuxièmes valeurs d'intensité (10) des points d'image (12) en utilisant des valeurs de réflexion de matériau (15) préenregistrées, en particulier mesurées, pour une première pluralité de points d'image (12a) ;
des moyens (36) pour attribuer une première valeur de confiance (K1) à chacune des premières valeurs d'intensité (10) des points d'image (12) et une deuxième valeur de confiance (K2) à chacune des deuxièmes valeurs d'intensité (10) des points d'image (12) ; et des moyens (38) pour calculer des troisièmes valeurs d'intensité (10), en particulier corrigées, des points d'image (12) en utilisant les valeurs de confiance (K1, K2) attribuées à chacune des premières et deuxièmes valeurs d'intensité (10), les troisièmes valeurs d'intensité (10) calculées, en particulier corrigées, des points d'image (12) étant utilisées dans la simulation (14) de la scène 3D, dans une simulation de trafic (14), et la simulation de trafic étant utilisée pour tester des véhicules automobiles autonomes, des aéronefs et/ou des véhicules spatiaux.

9. Programme d'ordinateur comprenant un code de programme pour mettre en œuvre un procédé selon l'une quelconque des revendications 1 à 7, lorsque le programme d'ordinateur est exécuté sur un ordinateur.
